# EUROPÄISCHE PATENTSCHRIFT

(11) **EP 1 713 674 B1**
(45) Veröffentlichungstag und Bekanntmachung des Hinweises auf die Patenterteilung: **25.05.2011**
(21) Anmeldenummer: 05701456.5
(22) Anmeldetag: 07.01.2005
(51) Int. Cl.: B60T 8/32, B60T 8/44, B60T 8/96, B60T 8/36

(54) **KRAFTRADBREMSANLAGE**
MOTORCYCLE BRAKE SYSTEM
SYSTEME DE FREINAGE DE MOTOCYCLETTE

(30) Priorität: 06.02.2004 DE 102004006108; 28.09.2004 DE 102004046940
(43) Veröffentlichungstag der Anmeldung: 25.10.2006
(73) Patentinhaber: Continental Teves AG & Co. oHG, 60488 Frankfurt (DE)
(72) Erfinder: BAYER, Ronald, 63165 Mühlheim/Main (DE); RIETH, Peter, 65343 Eltville (DE); JUNGBECKER, Johann, 55576 Badenheim (DE); ROLL, Georg, 63150 Heusenstamm (DE)
(86) Internationale Anmeldenummer: PCT/EP2005/050052
(87) Internationale Veröffentlichungsnummer: WO 2005/075269

(56) Entgegenhaltungen:
- WO-A-97/48584
- CH-A- 443 028
- DE-A1- 3 426 612
- PATENT ABSTRACTS OF JAPAN Bd. 2003, Nr. 12, 5. Dezember 2003 (2003-12-05) & JP 2003 285727 A (HONDA MOTOR CO LTD), 7. Oktober 2003 (2003-10-07)

## Beschreibung

Die Erfindung betrifft eine Kraftradbremsanlage nach dem Oberbegriff des Patentanspruchs 1.

Aus der EP 1 176 075 A2 ist bereits eine Kraftradbremsanlage bekannt. Diese Bremsanlage baut aufwendig und damit teuer, da sie nach dem Rückförderprinzip arbeitet. Bremsanlagen dieser Art kommen daher in preisgünstigen Krafträder nicht zur Anwendung, so dass bei Krafträdern des unteren Preissegments die Bremsanlage regelmäßig nicht über eine Bremsschlupfregelung verfügt.

Bei Krafträdern des unteren Preissegments besteht daher im allgemeinen die Gefahr, dass bei schlechten, insbesondere nassen Strassenverhältnissen und einem abrupt eingeleiteten Bremsvorgang eine Blockiertendenz des Vorderrades vorhanden ist. Im schlimmsten Fall kommt es zum Blockieren des Vorderrades und somit zum Verlust der Seitenführungskraft. Gerade bei Zweirädern führt mangelhafte Fahrstabilität zu einem extrem kritischen Zustand und stellt mit Blick auf das Sturzrisiko ein hohes Gefahrenpotential für den Fahrer dar.

Zwar ist bereits aus DE 34 26 612 A1 eine Kraftradbremsanlage der gattungsbildenden Art bekannt, die zur Bremsschlupfregelung über einen in einem Hauptbremszylinder angeordneten Stufenkolben verfügt, durch dessen unterschiedlich große Druckflächen sich der Bremsdruck im Vorderradbremskreis losgelöst von der tatsächlich vom Fahrer aufgebrachten Kraft regeln lässt. Hierzu sind in den Vorderradbremskreis Stellventile eingesetzt, die stufenweise die Wirksamkeit der einzelnen Druckflächen des Stufenkolbens vermindern, falls die am Vorderradbremskreis angeschlossene Radbremse blockiergefährdet ist.

Ferner ist aus WO 97/48584 A eine Kraftradbremsanlage mit Bremsschlupfregelung bekannt, die über einen oder mehrere Wegsensoren zur direkten oder indirekten Erfassung der Pedal- und/oder Kolbenposition des Hauptbremszylinders verfügt, um abhängig von der Fahr- oder Fahrbahnsituation und von der Bremssituation einen Grenzwert für die Pedal- bzw. Kolbenposition zu ermitteln, wobei beim Überschreiten des Grenzwertes während der Blockierschutzregelung ein weiterer Bremsdruckaufbau nur eingeschränkt erfolgt oder gar verhindert wird.

Aus CH 443 028 A ist eine mit einer Gleitschutzeinrichtung versehene Kraftfahrzeugbremsanlage bekannt, bei der das Bremsflüssigkeitsvolumen durch einen Sicherheitskontakt überwacht wird. Der Sicherheitskontakt wird vor dem Erreichen einer unzulässigen Erschöpfung des Bremsflüssigkeitsvolumens im Hauptbremszylinder durch das Bremspedal geöffnet, wodurch innerhalb der Gleitschutzeinrichtung der Rücklauf und damit das weitere Entweichen von Bremsflüssigkeit aus der Radbremse zum Vorratsbehälter unterbrochen wird.

Daher ist es die Aufgabe der vorliegenden Erfindung, eine kostengünstige, funktionssichere Bremsanlage mit Bremsschlupfregelung zu entwickeln, die sich besonders gut für den Einsatz in Krafträdern des unteren und mittleren Preisniveaus eignet.

Diese Aufgabe wird für eine Kraftradbremsanlage der angegebenen Art mit den kennzeichnenden Merkmalen des Patentanspruchs 1 gelöst.

Weitere Merkmale und Vorteile der Erfindung gehen aus den Unteransprüchen sowie aus der nachfolgenden Beschreibung eines Ausführungsbeispiels anhand zweier Zeichnungen hervor.

Es zeigen:
- Fig. 1: die Anordnung der erfindungsgemäßen Kraftradbrems- anlage in schematischer Darstellung zur Regelung des Bremsschlupfes an der Vorderradbremse eines Kraftrads,
- Fig. 2: den Aufbau einer vorteilhaften Vorderradbremsein- heit für die Kraftradbremsanlage nach Fig. 1 in schematisch dargestellter Anbindung an die Vorder- radbremse.

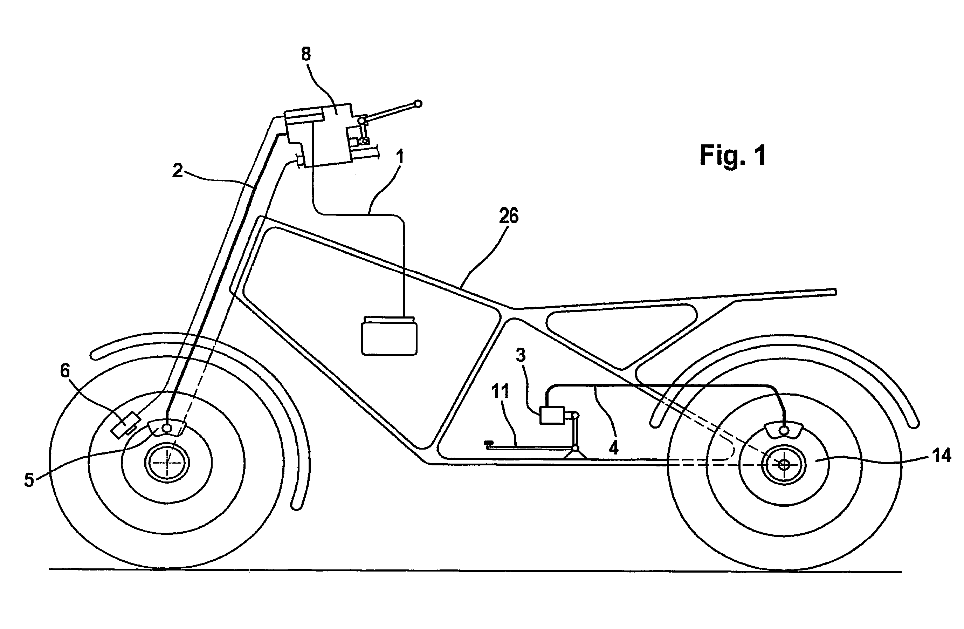

Die Figur 1 zeigt in einer Seitenansicht in schematischer Darstellung ein Kraftrad, dessen Vorderrad mit einer hydraulisch betätigbaren Radbremse 5 und einem Raddrehzahlsensor 6 ausgerüstet ist. An der Lenkstange 9 ist als wesentliches Bestandteil der Kraftradbremsanlage eine sogenannte Vorderradbremseinheit 8 befestigt, die über die abgebildete Bremsleitung 20 des Vorderradbremskreises 2 am Bremssattel der Radbremse 5 angeschlossen ist. Die Vorderradbremseinheit 8 ist zur elektrischen Energieversorgung mit dem Bordnetz 1 des Kraftrades verbunden.

Ferner geht aus Fig. 1 ein konventioneller hydraulischer Hinterradbremskreis 4 hervor, bestehend aus einem fußkraftproportional betätigbaren Hauptbremszylinder 3, der über die Bremsleitung des Hinterradbremskreises 4 mit einer Scheibenbremse verbunden ist.

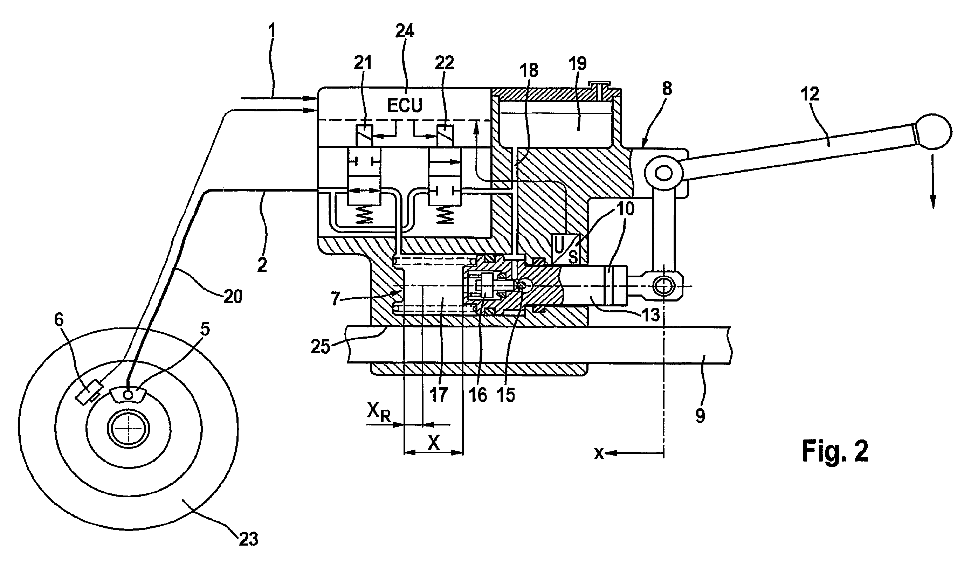

Obwohl in Fig. 1 nicht abgebildet, kann in der einfachsten Ausführungsform des Hinterradbremskreises 4 die Betätigung der Hinterradbremse über ein zwischen dem Bremspedal 11 und der Radbremse 14 angeordnetes Gestänge oder Seilzug ebenso rein mechanisch erfolgen, so dass in der Zusammenschau des anhand der Figur 2 noch näher zu erläuternden Vorderradbremskreises 2 gerade in Verbindung mit dem hinreichend effizient ausgelegten Hinterradbremskreis 4 eine besonders einfache Kraftradbremsanlage mit Bremsschlupfregelung geschaffen ist.

Die Figur 2 zeigt die zur Bremsschlupfregelung erforderlichen Einzelheiten der Kraftradbremsanlage am hydraulisch betätigbaren Vorderradbremskreis 2, die in der sogenannten Vorderradbremseinheit 8 integriert sind. Die Vorderradbremseinheit 8 weist einen manuell betätigbaren Hauptbremszylinder 7, einen mit dem Hauptbremszylinder 7 verbunden Bremsflüssigkeits-Ausgleichsbehälter 19 und jeweils ein elektromagnetisch betätigbares Ein- und Auslassventil 21, 22 zur Bremsschlupfregelung im Vorderradbremskreis 2 auf.

Durch das Einlassventil 21 lässt sich der in der Bremsleitung 20 manuell erzeugte Bremsdruck jederzeit begrenzen. Der Bremsdruckabbau in der Vorderradbremse 5 geschieht über das Auslassventil 22 direkt in den Ausgleichsbehälter 19, weshalb das Auslassventil 22 in Parallelschaltung zum Einlassventil 21 zwischen dem Vorderradbremskreis 2 und dem Bremsflüssigkeits-Ausgleichsbehälter 19 in einer hydraulischen Verbindung angeordnet ist.

Somit verdeutlicht die Figur 2 vorteilhaft, dass der Hauptbremszylinder 7 mit dem Ausgleichsbehälter 19, mit dem Ein- und Auslassventil 21, 22 und mit einem Wegsensor 10 baulich zu einer eigenständig handhabbaren, funktionsfähigen Vorderradbremseinheit 8 zusammengefasst sind, wobei zum schlupffreien Bremsenbetrieb als auch zum Druckaufbau in einer Bremsschlupfregelung die Vorderradbremseinheit 8 ausschließlich mittels eines auf den Hauptbremszylinder 7 einwirkenden Handbremshebels 12 betätigbar ist.

Zur elektrischen Betätigung des Ein- und Auslassventils 21, 22 ist ferner ein Steuergerät 24 vorhanden, das ein integrales Bestandteil der Vorderradbremseinheit 8 bildet. Das Steuergerät 24 ist vorzugsweise zur elektrischen Kontaktierung auf das Ein- und Auslassventil 21, 22 aufgesteckt und zur Stromversorgung mit dem Bordnetz 1 verbunden.

Zur Befestigung der Vorderradbremseinheit 8 an einer Lenkstange 9 weist die Vorderradbremseinheit einen Halteabschnitt mit einer Durchgangsbohrung 25 auf.

Die Erfindung sieht somit vor, dass die Bremsschlupfregelung ausschließlich auf die Vorderradbremse 5 beschränkt ist, die regelmäßig hohe Bremskräfte auf die Fahrbahn zu übertagen hat, wobei als wesentliches Element der Erfindung der Druckaufbau im Vorderradbremskreis 2 abhängig von der Schaltstellung des Ein- und Auslassventils 21, 22 durch das im Hauptbremszylinder 7 verfügbare sowie ausschließlich manuell in den Vorderradbremskreis 2 verdrängbare Bremsflüssigkeitsvolumen bestimmt wird.

Zur Vermeidung einer Erschöpfung des Bremsflüssigkeitsvolumens während einer Bremsschlupfregelung, da Bremsflüssigkeit in der Druckabbauphase über das Auslassventil 22 zum Ausgleichsbehälter entweichen kann, ist deshalb eine Überwachung des im Hauptbremszylinder 7 vorhandenen Bremsflüssigkeitsvolumens vorgesehen.

Die Überwachung des im Hauptbremszylinder 7 befindlichen Bremsflüssigkeitsvolumens erfolgt in einer zweckmäßigen Ausführung anhand der Erfassung der Position eines die Bremsflüssigkeit in den Vorderradbremskreis 2 verdrängenden Arbeitskolbens 13 im Hauptbremszylinder 7, wozu der Hauptbremszylinder 7 mit dem Wegsensor 10 versehen ist.

Bei Wunsch oder Bedarf kann auf den Wegsensor 10 verzichtet werden, wenn auf Basis der Ventilschaltzyklen ein sogenanntes Volumenverbrauchsmodell für den schlupfgeregelten Vorderradbremskreis 2 nachgebildet und als Kennfeld im Steuergerät 24 abgelegt wird. Jedoch bedarf es bezüglich dieser Methode einem zusätzlichen Softwareaufwand, um mit guter Näherung an die vergleichsweise einfache und präzise Volumenverbrauchserfassung des Wegsensors 10 heran zu kommen, so dass an dieser Stelle auf diese nicht erfindungsgemäße Alternative nicht weiter eingegangen und vielmehr auf die Bedeutung des Wegsensors 10 nachfolgend hingewiesen werden soll.

Zur Auswertung der Signale des Wegsensors 10 ist das elektronische Steuergerät 24 mit einer geeigneten Auswerteschaltung versehen, wobei abhängig vom Ergebnis der Auswertung der Signale des Wegsensors 10 mittels des Steuergeräts 24 eine Modifikation der für das Ein- und Auslassventil 21, 22 vorgesehenen Regelalgorithmen derart erfolgt, dass das Bremsflüssigkeitsvolumen im Hauptbremszylinder 7 während der Bremsschlupfregelung wohl dosiert und damit nicht vorzeitig über das Ein- und Auslassventil 21, 22 in den Vorderradbremskreis 2 bzw. in den Ausgleichsbehälter 19 verdrängt werden kann. Vorteilhaft ergibt sich hierdurch ein komfortabler, nur allmählich zunehmender Betätigungsweg am Handbremshebel 12, ohne die Gefahr einer vorzeitigen Erschöpfung des Bremsflüssigkeitsvolumens im Hauptbremszylinder 7.

Während der Bremsschlupfregelung lässt sich das im Hauptbremszylinder 7 verfügbare Bremsflüssigkeitsvolumen bis auf ein für die Mindestbremsverzögerung des Kraftrades erforderliches Reservevolumen reduzieren. Der Wegsensor 10 veranlasst beim Erreichen des Reservevolumens, dass die vom Steuergerät 24 initiierte Bremsschlupfregelung am Vorderradbremskreis 2 ausgesetzt wird, indem das Ein- und Auslassventil 21, 22 nicht mehr elektromagnetisch angesteuert werden. Das Ein- und Auslassventil 21, 22 verharren sodann in ihrer abgebildeten Grundstellung, in welcher über das Einlassventil 21 zwar ein ungehinderte Druckmittelverbindung zur Vorderradbremse 5 besteht, jedoch ein Entweichen von Druckmittel aus dem Vorderradbremskreis 2 in den Ausgleichsbehälter 19 infolge der Sperrstellung des Auslassventils 22 verhindert ist.

Im vorliegenden Ausführungsbeispiel erfolgt der Druckaufbau im Vorderachskreis 2, sobald durch das Betätigen des Handbremshebels 12 das mittels eines Zylinderstiftes 15 im Arbeitskolben 13 mechanisch offen gehaltene Zentralventil 16 nach einem kurzen Arbeitskolbenhub X geschlossen ist, wodurch die hydraulische Verbindung des Ausgleichsbehälters 19 mit dem Druckraum 17 im Hauptbremszylinder 7 getrennt ist.

Alternativ kann das Zentralventil 16 auch durch ein Manschettenventil am Arbeitskolben 13 ersetzt werden, das nach minimalem Arbeitskolbenhub X eine mit dem Ausgleichsbehälter 19 verbundene Schnüffelbohrung überfahren und damit abtrennen würde.

Losgelöst von der zuvor beschriebenen Ventilbauarten wird somit zu Beginn der Betätigung des Arbeitskolbens 13 auf jeden Fall der Druckraum 17 des Hauptzylinders 7 vom Ausgleichsbehälter 19 getrennt. Die Radbremse 5 ist dann über die Bremsleitung 20 und das stromlos offene Einlassventil 21 ausschließlich mit dem Druckraum 17 des Hauptbremszylinders 7 hydraulisch verbunden. Ein manueller Druckaufbau im Vorderradbremskreis 2 kann somit erfolgen.

Grundsätzlich gilt:
1. Eine Blockierneigung des Vorderrades 23 wird mittels des Raddrehzahlsensors 6 und dessen Signalauswertung im Steuergerät 24 sicher erkannt. Das Einlassventil 21 wird - wie eingangs erwähnt - über das Steuergerät 24 elektromagnetisch geschlossen, um einen weiterer Druckaufbau im Vorderradkreis 2 zu unterbinden.
2. Sollte zur Reduzierung der Blockierneigung zusätzlich ein weiterer Druckabbau im Vorderradbremskreis 2 erforderlich sein, so wird dies durch das Öffnen des mit dem Ausgleichsbehälter 19 verbindbaren, normalerweise stromlos geschlossenen Auslassventil 22 erreicht. Das Auslassventil 22 wird wieder geschlossen, sobald die Radbeschleunigung wieder über ein bestimmtes Maß hinaus anwächst. In der Druckabbauphase bleibt das Einlassventil 21 geschlossen, so dass sich der vom Handbremshebel 12 im Druckraum 17 erzeugte Hauptzylinderdruck nicht auf den Vorderradbremskreis 2 fortpflanzen kann.
3. Wenn die ermittelten Schlupfwerte wieder einen Druckaufbau im Vorderradbremskreis 2 erlauben, wird das Einlassventil 21 entsprechend der Anforderung des im Steuergerät 24 integrierten Schlupfreglers zeitlich begrenzt geöffnet. Das für den Druckaufbau erforderliche Differenzvolumen wird nun vom Druckraum 17 des Hauptbremszylinders 13 entnommen. Hierbei verändert sich je nach entnommenem Differenzvolumen der Arbeitskolbenhub, d.h. der manuell betätigte Arbeitskolben 13 wirkt in den Druckaufbauphasen als Förderpumpe für den Vorderradkreis 2.

Weil das im Hauptbremszylinder 7 vorhandene Bremsflüssigkeitsvolumen begrenzt ist, wird durch die eingangs erläuterte Modifikation der Regelalgorithmen des Schlupfreglers der Volumenverbrauch im Hauptbremszylinder 7 und somit der entstehende Arbeitskolbenhub X minimiert. Durch die Modifikation der Regelalgorithmen ergibt sich ein entsprechend wirtschaftlicher Umgang mit dem begrenzten Bremsflüssigkeitsvolumen im Druckraum 17 des Hauptbremszylinders 7.

Da der Wegsensor 10 die Position des Arbeitskolbens 13 permanent erfasst, lässt sich das im Rahmen der Bremsschlupfreglung "verbrauchte" Volumen jederzeit mittels des Steuergeräts 24 errechnen und der Schlupfregler im Grenzfall beim Erreichen eines bestimmten Reservehubs XR abschalten.. Das dann im Druckraum 17 verbleibende Reservevolumen ist derart gewählt, dass ein voller Druckaufbau bzw. die für Krafträder gesetzlich vorgeschriebene Mindestverzögerung durch den Vorderradkreis (2) gewährleistet ist.

Zusammenfassend ist somit festzustellen:
Das beschriebene Bremssystem basiert auf der Integration eines kostengünstigen, pumpenlosen ABS-Regelsystems in den Vorderradbremskreis 2 einer Kraftrad-Bremsanlage, ohne Einfluss auf den konventionell ausgeführten Hinterachsbremskreis 4 zu nehmen.

Das ABS-Regelsystem ist hierbei vorzugsweise in eine Bremsbetätigungseinheit des Vorderradbremskreises 2 integriert und bildet eine kompakte Vorderradbremseinheit 8. Optional kann das ABS-Regelsystem auch als eigenständige Baueinheit in den Vorderradbremskreis 2 integriert werden.

Dieses System ist ein sogenanntes offenes Bremssystem, da der Druckabbau über das Auslassventil unmittelbar in den Ausgleichsbehälter 19 erfolgt, aus dem der Druckraum 17 erneut befüllt werden kann, wenn der Arbeitskolben 13 in der unbetätigten Grundposition verharrt. Aus Kosten- und Integrationsgründen erfolgt der Druckaufbau während der Bremsschlupfregelung ohne eine elektrisch angetriebene Hydraulikpumpe, wobei infolge des Druckabbaus in den Ausgleichsbehälter 19 auch auf einen Niederdruckspeicher verzichtet werden kann.
Schließlich soll nicht unerwähnt bleiben, dass natürlich auch mit entsprechendem Mehraufwand die beschriebenen Merkmale des Vorderradbremskreises auf den Hinterradbremskreis anwendbar sind, bzw. der Hinterradbremskreis kann ebenso um die Merkmale des Vorderradbremskreises ergänzt werden, wenn hierfür ein Wunsch oder Bedarf besteht.

### Bezugszeichenliste

- 1: Bordnetz
- 2: Vorderradbremskreis
- 3: Hauptbremszylinder
- 4: Hinterradbremskreis
- 5: Radbremse
- 6: Drehzahlsensor
- 7: Hauptbremszylinder
- 8: Vorderradbremseinheit
- 9: Lenkstange
- 10: Wegsensor
- 11: Bremspedal
- 12: Handbremshebel
- 13: Arbeitskolben
- 14: Radbremse
- 15: Zylinderstift
- 16: Zentralventil
- 17: Druckraum
- 18: Rücklaufleitung
- 19: Ausgleichsbehälter
- 20: Bremsleitung
- 21: Einlassventil
- 22: Auslassventil
- 23: Vorderrad
- 24: Steuergerät
- 25: Durchgangsbohrung
- 26: Kraftradrahmen

## Patentansprüche

1. Kraftradbremsanlage mit wenigstens einem hydraulisch betätigbaren Vorderradbremskreis (2), mit einem am Vorderradbremskreis (2) angeschlossenen, manuell betätigbaren Hauptbremszylinder (3), der mit einem Bremsflüssigkeits-Ausgleichsbehälter (19) verbunden ist, mit wenigstens einem zur Bremsschlupfregelung im Vorderradbremskreis (2) aktivierbaren Ein- und Auslassventil (21,22), wobei in einer Bremsschlupfregelung der Druckaufbau im Vorderradbremskreis (2) abhängig von der Schaltstellung des Ein- und Auslassventils (21, 22) durch das im Hauptbremszylinder (7) verfügbare sowie ausschließlich manuell in den Vorderradbremskreis (2) verdrängbare Bremsflüssigkeitsvolumen bestimmt ist, **dadurch gekennzeichnet, dass** zur Vermeidung einer Erschöpfung des Bremsflüssigkeitsvolumens eine Überwachung des im Hauptbremszylinder (7) vorhandenen Bremsflüssigkeitsvolumens mittels eines Wegsensors (10) vorgesehen ist, der mit dem Hauptbremszylinder (7), dem Ausgleichsbehälter (19) und dem Ein- und Auslassventil (21, 22) baulich zu einer eigenständig handhabbaren, funktionsfähigen Vorderradbremseinheit (8) zusammengefasst ist.

2. Kraftradbremsanlage nach Anspruch 1, **dadurch gekennzeichnet, dass** zum Druckaufbau in einer Bremsschlupfregelung die Vorderradbremseinheit (8) ausschließlich mittels eines auf den Hauptbremszylinder (7) einwirkenden Handbremshebels (12) oder Bremspedals betätigbar ist.

3. Kraftradbremsanlage nach Anspruch 1, **dadurch gekennzeichnet, dass** die Überwachung des im Hauptbremszylinder (7) befindlichen Bremsflüssigkeitsvolumens anhand der Erfassung der Position eines die Bremsflüssigkeit in den Vorderradbremskreis (2) verdrängenden Arbeitskolbens (13) im Hauptbremszylinder (7) erfolgt, wozu der Hauptbremszylinder (7) mit dem Wegsensor (10) versehen ist.

4. Kraftradbremsanlage nach Anspruch 3, **dadurch gekennzeichnet, dass** zur Auswertung von Signalen des Wegsensors (10) in einer Auswerteschaltung ein elektronisches Steuergerät (24) vorgesehen ist, in dem abhängig vom Auswerteergebnis eine Modifikation der für das Ein- und Auslassventil (21, 22) vorgesehenen Regelalgorithmen derart vollziehbar ist, dass mit der Abnahme an Bremsflüssigkeitsvolumen im Hauptbremszylinder (7) der Volumenverbrauch im Hauptbremszylinder (7) durch geeignetes Schalten des Ein- und Auslassventils (21, 22) minimiert ist.

5. Kraftradbremsanlage nach Anspruch 4, **dadurch gekennzeichnet, dass** das im Hauptbremszylinder (7) verfügbare Bremsflüssigkeitsvolumen während der Bremsschlupfregelung auf ein für die Mindestbremsverzögerung erforderliches Reservevolumen reduzierbar ist, und dass beim Erreichen des Reservevolumens die durch das Steuergerät (24) initiierte Bremsschlupfregelung für den Vorderradbremskreis (2) ausgesetzt ist.

6. Kraftradbremsanlage nach einem der vorangegangenen Ansprüche, **dadurch gekennzeichnet, dass** ein unabhängig vom Vorderradbremskreis (2) betätigbarer Hinterradbremskreis (4) vorgesehen ist, der mechanisch und/oder hydraulisch betätigbar ist, wozu eine direkte kraftproportionale mechanische und/oder hydraulische Verbindung zwischen einem manuell betätigbaren Bremshebel oder Bremspedal (11) und einer Radbremse (14) des Hinterradbremskreises (4) besteht.

7. Kraftradbremsanlage nach einem der vorangegangenen Ansprüche, **dadurch gekennzeichnet, dass** das Einlassventil (21) zum Bremsdruckaufbau in einer hydraulischen Verbindung des Hauptbremszylinders (7) mit dem Vorderradbremskreis (2) angeordnet ist, und dass das Auslassventil (22) zum Bremsdruckabbau in den Ausgleichsbehälter (19) in Parallelschaltung zum Einlassventil (21) zwischen dem Vorderradbremskreis (2) und dem Bremsflüssigkeits-Ausgleichsbehälter (19) vorgesehen ist.

8. Kraftradbremsanlage nach einem der vorangegangen Ansprüche 4 bis 7, **dadurch gekennzeichnet, dass** das Steuergerät (24) ein integrales Bestandteil der Vorderradbremseinheit (8) bildet, das vorzugsweise zur elektrischen Kontaktierung auf das Ein- und Auslassventil (21, 22) aufgesteckt ist.

9. Kraftradbremsanlage nach einem der vorangegangen Ansprüche, **dadurch gekennzeichnet, dass** die Vorderradbremseinheit (8) zur Befestigung an einer Lenkstange (25) oder an einem Kraftradrahmen (26) einen Halteabschnitt mit einer Durchgangsbohrung (25) aufweist.

## Claims

1. Motorcycle brake system, with at least one hydraulically actuatable front-wheel brake circuit (2), with a manually actuatable brake master cylinder (3) which is connected at the front-wheel brake circuit (2) and is connected to a brake-fluid balancing tank (19), and at least one inlet and outlet valve (21, 22) activatable for brake slip control in the front-wheel brake circuit (2), wherein, in brake slip control the pressure build-up in the front-wheel brake circuit (2) is determined, as a function of the switching position of the inlet and outlet valve (21, 22), by the brake fluid volume available in the brake master cylinder (7) and displaceable only manually into the front-wheel brake circuit (2), **characterized in that**, to avoid exhausting the brake fluid volume, monitoring of the brake fluid volume present in the brake master cylinder (7) is provided by means of a displacement sensor (10) which is combined structurally with the brake master cylinder (7), the balancing tank (19) and the inlet and outlet valve (21, 22) to form an independently handleable functioning front-wheel brake unit (8).

2. Motorcycle brake system according to Claim 1, **characterized in that**, for the build-up of pressure in brake slip control, the front-wheel brake unit (8) is actuatable solely by means of a hand-operated brake lever (12) or a brake pedal acting on the brake master cylinder (7).

3. Motorcycle brake system according to Claim 1, **characterized in that** monitoring of the brake fluid volume located in the brake master cylinder (7) is carried out by detecting the position of a working piston (13), displacing the brake fluid into the front-wheel brake circuit (2), in the brake master cylinder (7), for which purpose the brake master cylinder (7) is provided with the displacement sensor (10).

4. Motorcycle brake system according to Claim 3, **characterized in that**, to evaluate signals from the displacement sensor (10), in an evaluation circuit, an electronic control apparatus (24) is provided, in which a modification of the control algorithms provided for the inlet and outlet valve (21, 22) can be executed as a function of the evaluation result in such a way that, with the decrease in brake fluid volume in the brake master cylinder (7), the volume consumption in the brake master cylinder (7) is minimized by means of suitable switching of the inlet and outlet valve (21, 22).

5. Motorcycle brake system according to Claim 4, **characterized in that** the brake fluid volume available in the brake master cylinder (7) can be reduced, during brake slip control, to a reserve volume required for minimum braking deceleration, and **in that**, when the reserve volume is reached, the brake slip control, initiated by the control apparatus (24), for the front-wheel brake circuit (2) is discontinued.

6. Motorcycle brake system according to one of the preceding claims, **characterized in that** a rear-wheel brake circuit (4) actuatable independently of the front-wheel brake circuit (2) is provided, which can be actuated mechanically and/or hydraulically, for which purpose there is a direct force-proportional mechanical and/or hydraulic connection between a manually actuatable brake lever or brake pedal (11) and a wheel brake (14) of the rear-wheel brake circuit (4).

7. Motorcycle brake system according to one of the preceding claims, **characterized in that**, for the build-up of brake pressure, the inlet valve (21) is arranged in a hydraulic connection of the brake master cylinder (7) to the front-wheel brake circuit (2), and **in that**, for the breakdown of brake pressure into the balancing tank (19), the outlet valve (22) is provided, connected in parallel to the inlet valve (21), between the front-wheel brake circuit (2) and the brake-fluid balancing tank (19).

8. Motorcycle brake system according to one of the preceding Claims 4 to 7, **characterized in that** the control apparatus (24) forms an integral part of the front-wheel brake unit (8) and is preferably plugged onto the inlet and outlet valve (21, 22) for electrical contacting.

9. Motorcycle brake system according to one of the preceding claims, **characterized in that**, for fastening to a handlebar (25) or a motorcycle frame (26), the front-wheel brake unit (8) has a holding portion with a through-bore (25).

## Revendications

1. Système de freinage de motocyclette avec au moins un circuit de freinage de roue avant (2) à commande hydraulique, avec un maître-cylindre de frein (3) à commande manuelle, raccordé au circuit de freinage de roue avant (2) et qui est relié à un réservoir compensateur de liquide de frein (19), avec au moins une soupape d'entrée et de sortie (21, 22) pouvant être activée dans le circuit de freinage de roue avant (2) pour la régulation de l'anti-patinage des roues, dans lequel, dans une régulation de l'anti-patinage des roues, la montée de pression dans le circuit de freinage de roue avant (2) est déterminée, en fonction de la position de commutation de la soupape d'entrée et de sortie (21, 22), par le volume de liquide de frein disponible dans le maître-cylindre de frein (7) et déplaçable de façon exclusivement manuelle dans le circuit de freinage de roue avant (2), **caractérisé en ce que**, pour éviter un épuisement du volume de liquide de frein, il est prévu une surveillance du volume de liquide de frein présent dans le maître-cylindre de frein (7) au moyen d'un détecteur de course (10), qui est rassemblé avec le maître-cylindre de frein (7), le réservoir compensateur (19) et la soupape d'entrée et de sortie (21, 22) par construction en une unité de freinage de roue avant (8) fonctionnelle et maniable de manière autonome.

2. Système de freinage de motocyclette selon la revendication 1, **caractérisé en ce que**, pour la montée de pression dans une régulation de l'anti-patinage des roues, l'unité de freinage de roue avant (8) peut être actionnée exclusivement au moyen d'un levier de frein à main (12) ou d'une pédale de frein agissant sur le maître-cylindre de frein (7).

3. Système de freinage de motocyclette selon la revendication 1, **caractérisé en ce que** la surveillance du volume de liquide de frein se trouvant dans le maître-cylindre de frein (7) est effectuée en fonction de la détection de la position d'un piston de travail (13) dans le maître-cylindre de frein (7), qui déplace le liquide de frein dans le circuit de freinage de roue avant (2), le maître-cylindre de frein (7) étant à cet effet muni du détecteur de course (10).

4. Système de freinage de motocyclette selon la revendication 3, **caractérisé en ce que**, pour l'évaluation de signaux du détecteur de course (10), il est prévu dans un circuit d'évaluation un appareil de commande électronique (24), dans lequel une modification des algorithmes de régulation prévus pour la soupape d'entrée et de sortie (21, 22) en fonction du résultat de l'évaluation peut être accomplie de telle manière qu'avec la diminution du volume de liquide de frein dans le maître-cylindre de frein (7), la consommation volumique dans le maître-cylindre de frein (7) soit minimisée par une commutation appropriée de la soupape d'entrée et de sortie (21, 22).

5. Système de freinage de motocyclette selon la revendication 4, **caractérisé en ce que** le volume de liquide de frein disponible dans le maître-cylindre de frein (7) peut être réduit pendant une régulation de l'anti-patinage des roues à un volume de réserve nécessaire pour le ralentissement de freinage minimal, et **en ce que**, lorsque le volume de réserve est atteint, la régulation de l'anti-patinage des roues amorcée par l'appareil de commande (24) est interrompue pour le circuit de freinage de roue avant (2).

6. Système de freinage de motocyclette selon l'une quelconque des revendications précédentes, **caractérisé en ce qu'**il est prévu un circuit de freinage de roue arrière (4) pouvant être actionné indépendamment du circuit de freinage de roue avant (2), qui peut être actionné de façon mécanique et/ou hydraulique, une liaison mécanique et/ou hydraulique directe proportionnelle à la force existant à cet effet entre un levier de frein actionnable à la main ou une pédale de frein (11) et un frein de roue (14) du circuit de freinage de roue arrière (4).

7. Système de freinage de motocyclette selon l'une quelconque des revendications précédentes, **caractérisé en ce que** la soupape d'entrée (21) est disposée dans une liaison hydraulique du maître-cylindre de frein (7) avec le circuit de freinage de roue avant (2) pour la montée de la pression de freinage, et **en ce que** la soupape de sortie (22) est prévue en montage parallèle avec la soupape d'entrée (21) entre le circuit de freinage de roue avant (2) et le réservoir compensateur de liquide de frein (19) pour la baisse de pression de freinage dans le réservoir compensateur (19).

8. Système de freinage de motocyclette selon l'une quelconque des revendications précédentes 4 à 7, **caractérisé en ce que** l'appareil de commande (24) est une partie intégrante de l'unité de freinage de roue avant (8), qui est de préférence engagée sur la soupape d'entrée et de sortie (21, 22) pour réaliser le contact électrique.

9. Système de freinage de motocyclette selon l'une quelconque des revendications précédentes, **caractérisé en ce que** l'unité de freinage de roue avant (8) présente une partie de fixation avec un alésage traversant (25) pour la fixation sur un guidon (25) ou sur un cadre de motocyclette (26).
